# EUROPÄISCHE PATENTSCHRIFT

(11) **EP 3 209 543 B1**
(45) Veröffentlichungstag und Bekanntmachung des Hinweises auf die Patenterteilung: **24.07.2019**
(21) Anmeldenummer: 15763335.5
(22) Anmeldetag: 15.09.2015
(51) Int. Cl.: B62M 6/55, B62M 11/12

(54) **VERSTELLBARES REIBRINGGETRIEBE FÜR EIN MIT MOTORKRAFT UND/ODER PEDALKRAFT BETREIBBARES FAHRZEUG**
ADJUSTABLE FRICTION RING-TYPE TRANSMISSION FOR A VEHICLE OPERATED USING MOTOR POWER AND/OR PEDAL FORCE
MÉCANISME DE TRANSMISSION RÉGLABLE À ANNEAU DE FRICTION POUR VÉHICULE POUVANT ÊTRE MU PAR LA FORCE D'UN MOTEUR ET/OU D'UN PÉDALIER

(30) Priorität: 23.10.2014 DE 102014221514
(43) Veröffentlichungstag der Anmeldung: 30.08.2017
(73) Patentinhaber: Robert Bosch GmbH, 70442 Stuttgart (DE)
(72) Erfinder: HILZINGER, Juergen, 71272 Renningen (DE); KIMMICH, Peter, 71144 Steinenbronn (DE); HINTERKAUSEN, Markus, 71701 Schwieberdingen (DE)
(86) Internationale Anmeldenummer: PCT/EP2015/071065
(87) Internationale Veröffentlichungsnummer: WO 2016/062461

(56) Entgegenhaltungen:
- WO-A1-2014/026754
- WO-A2-2007/061993
- DE-A1-102012 023 150
- DE-A1-102012 209 096
- FR-A1- 2 988 796
- US-A- 4 158 317
- US-A1- 2001 024 993

## Beschreibung

### Stand der Technik

Die vorliegende Erfindung betrifft ein Reibringgetriebe für ein mit Motorkraft und/oder Pedalkraft betreibbares Fahrzeug mit einer Kurbelwelle für Tretkurbeln und mit einer Kurbelwellenmittelachse, die als theoretische und nicht als feststehende physische Achse zu verstehen ist, wobei das Reibringgetriebe insbesondere in einem Elektrofahrrad verwendet werden kann. Das Reibringgetriebe weist einen inneren Reibring und einen äußeren Reibring sowie wenigstens eine drehbare Doppelkegelrolle auf, die mit dem inneren und dem äußeren Reibring in Reibeingriff steht. Wenn ein Drehmoment übertragen wird, wirkt zum Zwecke der Reibungserzeugung zwischen der Doppelkegelrolle und den Reibringen jeweils eine Andruckkraft. Da diese Andruckkräfte zumindest zum Teil in entgegengesetzte Richtung auf die Doppelkegelrolle einwirken, existiert ein Kraftflusspfad zwischen dem inneren Reibring und dem äußeren Reibring, entlang dem Andruckkräfte von einem der Reibringe zu dem anderen geleitet werden. Innerhalb dieses Kraftflusspfades ist eine Kraftrückschlusseinrichtung zur Übertragung von Andruckkraft von einem Reibring zu dem anderen Reibring angeordnet. Dabei ist eines der Reibräder in Bezug auf die Kraftrückschlusseinrichtung drehfest angeordnet. Der andere Reibring ist in Bezug auf die Kraftrückschlusseinrichtung drehbar.

Im Stand der Technik sind Fahrzeuge, insbesondere Elektrofahrräder bekannt, bei denen der Antrieb sowohl mit Muskelkraft als auch mit Motorkraft und insbesondere auch mit von Motorkraft unterstützter Muskelkraft möglich ist. Da es für die Trittfrequenz des Fahrers einen optimalen Bereich gibt und die mögliche Trittfrequenz nach oben begrenzt ist, sind Getriebe an solchen Fahrzeugen vorteilhaft, weil damit die Trittfrequenz in den optimalen bzw. möglichen Bereich gebracht werden kann. Reibringgetriebe haben die Vorteile, dass sie stufenlos und auch im Stand verstellbar sind. Nachteilig an einem Reibringgetriebe ist jedoch der vergleichsweise schlechte Wirkungsgrad, der sowohl durch die Reibvorgänge als auch durch Getriebekomponenten wie etwa Lager verursacht wird. Aus der DE 10 2012 209 096 A1 ist ein Fahrradgetriebe nach dem Grundprinzip des Doppelkegel-Reibring-Getriebes bekannt, das in Tretlagernähe und in achsparalleler Anordnung zur Kurbelwelle in einen Pedelec-/eBike-Antrieb integriert ist. In der WO 2014/026 754 A1 ist ein Fahrradgetriebe, welches ein solches Doppelkegel-Reibring-Getriebe umfasst, in ebenfalls achsparalleler Anordnung zur Kurbelwelle und in Tretlagernähe beschrieben.

Nachteilig an der Konstruktion des Reibringgetriebes nach der DE 10 2012 209 096 A1 ist, dass die Kraftrückschlusseinrichtung, welche das Anpressen der Reibringe an die Doppelkegel ermöglicht, außen um das Reibringgetriebe herum verläuft. Dadurch ist die Kraftrückschlusseinrichtung ein Teil mit einer großen Oberfläche und dementsprechend schwer, was dem für Fahrzeuge allgemein gültigen Leichtbaugedanken entgegen spricht.

Nachteilig an den bekannten Getrieben ist weiter, dass die Verstellung des Übersetzungsverhältnisses ausschließlich durch das Innere der Antriebs- oder Abtriebswelle des Reibringgetriebes und als Verstellung per Gewinde ausgeführt ist. Dies behindert erheblich die Konstruktionsfreiheit bei der Integration eines solchen Getriebes in ein Fahrzeug; insbesondere muss zur Verstellung eine Drehbewegung von einigen Umdrehungen erzeugt werden. Zudem ist diese Drehbewegung örtlich auf eine Mittenposition in Bezug auf das Getriebe festgelegt. Auch die Drehachse der Verstellrotation ist fest vorgegeben und verläuft koaxial zur Mittelachse des Getriebes.

Das Dokument US 2001/0024993 A1 offenbart ein CVT-Getriebe und in der Schrift DE 10 2012 023 150 A1 ist ein stufenloses Tretlagergetriebe beschrieben. In diesen Getrieben stehen jeweils verstellbare Doppelkegelrollen mit Reibringen in reibschlüssiger Verbindung Die US 2001/0024993 A1 offenbart die Merkmale des Oberbegriffs des Anspruchs 1.

### Offenbarung der Erfindung

Das erfindungsgemäße Reibringgetriebe mit den Merkmalen des Anspruchs 1 weist eine Verstelleinrichtung für das Übersetzungsverhältnis des Reibringgetriebes auf, die entlang einer Verstellbahn beweglich ist. Die Verstellbahn hat eine Komponente ihres Verlaufs in Richtung einer Mittelachse des Rollenträgers, wobei sie zugleich höchstens weniger als eine ganze Umdrehung um das Reibringgetriebe herum verläuft, vorzugsweise weniger als 180 Grad, besonders bevorzugt weniger als 90 Grad. Ganz besonders bevorzugt verläuft die Verstellbahn gerade und folgt dabei der Richtung einer gedachten Mittelachse des Reibringgetriebes. Diese Mittelachse fällt üblicherweise mit der Mittelachse eines Rollenträgers der Doppelkegelrollen zusammen.

Erfindungsgemäß
durchdringt die Verstelleinrichtung ein das Reibringgetriebe umgebendes Gehäuse. Die Verstellbahn verläuft erfindungsgemäß entlang einer Aussparung in dem Gehäuse. Erfindungsgemäß ist die Verstellbahn weniger als 360 Grad, bevorzugt weniger als 180 Grad, stärker bevorzugt weniger als 90 Grad, umläuft. Das Gehäuse kann dann insbesondere einstückig hergestellt werden, was im Allgemeinen weniger aufwendig ist als eine mehrstückige Verbundlösung. Besondere Festigkeit des Gehäuses wird erreicht, wenn wenigstens eine halbe Umdrehung des Gehäuses von der Verstellbahn nicht durchbrochen ist. Weniger als 90 Grad Umlauf der Verstellbahn um das Reibringgetriebe hat den Vorteil, dass durch den geringeren Umgriffswinkel die Verstellung vereinfacht ist. Eine besonders einfache Verstellung ergibt sich bei einer rein linearen Bewegung im Wesentlichen in Richtung der Mittelachse des Rollenträgers. Erfindungsgemäß ist die Verstelleinrichtung fest mit dem Rollenträger verbunden, d.h., sie ist zu diesem nicht beweglich, sodass eine Betätigung der Verstelleinrichtung den Rollenträger in axialer Richtung unmittelbar verschiebt, wodurch die Übersetzung des Reibringgetriebes geändert wird. Es ist denkbar, dass der Rollenträger beim Verstellen gedreht wird, vorzugsweise wird der Rollenträger jedoch nicht gedreht und ausschließlich linear verschoben. Erfindungsgemäß weist die Verstelleinrichtung kein Verstellgewinde auf. Die Verstelleinrichtung verläuft vorzugsweise nicht durch die zentrale Mitte des Reibringgetriebes. Die erfindungsgemäße Verstelleinrichtung schafft die Möglichkeit, die Übersetzung des Reibringgetriebes schnell und einfach einzustellen.

Vorzugsweise verlaufen der innere und der äußere Reibring um die Kurbelwelle. Dies ermöglicht, die Kurbelwelle im Zentrum des Reibringgetriebes anzuordnen. Bevorzugt ist das Reibringgetriebe mit einem Traktionsfluid gefüllt, welches gute Schmiereigenschaften besitzt und im intensiven Reibkontakt dennoch eine hohe Reibung zwischen den Reibpartnern bewirkt.

Ein Reibringgetriebe mit der erfindungsgemäßen Verstellung wird besonders bevorzugt am Tretlager eingebaut. Ebenfalls bevorzugt ist eine integrierte Bauweise mit dem Tretlager und dem Motor. Dadurch ergeben sich die Vorteile einer optimalen Massenverteilung, welche durch einen tiefen, zentralen Schwerpunkt und ein leichtes Hinterrad erreicht wird. Es ergeben sich ein verbessertes Handling, geringere gefederte Massen und eine gute Fahrdynamik. Außerdem wird die Montage und Demontage des Hinterrades vereinfacht. Der Fahrradhersteller muss außerdem nur eine einzige integrierte Antriebseinheit statt mehrerer separater Komponenten in das Fahrrad einbauen. Dem Kunden kann ein einheitliches Modul aus Übersetzungs- und Antriebssteuerung präsentiert werden.

Die Unteransprüche zeigen bevorzugte Weiterbildungen der Erfindung.

In einer Ausführungsform verläuft die Kraftrückschlusseinrichtung innerhalb der Reibringe. Auf diese Weise wird im Vergleich zu der nach dem Stand der Technik außerhalb der Reibringe verlaufenden Kraftrückschlusseinrichtung Gewicht eingespart. Vorzugsweise erstreckt sich zumindest ein Abschnitt der Kraftrückschlusseinrichtung in Richtung der Mittelachse des Rollenträgers. Insbesondere weist dieser Abschnitt einen kleineren Durchmesser als der Reibdurchmesser des inneren Reibrings auf. Besonders vorteilhaft ist dabei, dass die gemäß dieser Ausführungsform innen umlaufenden Kraftrückschlusseinrichtung den Verlauf der Verstelleinrichtung von dem Reibringträger zu einem Durchbruch in dem Gehäuse erlaubt. Nach dem Stand der Technik ist dieser erforderliche Bauraum zwischen dem Rollenhalter und dem Gehäuse durch die umlaufende Kraftrückschlusseinrichtung bereits belegt.

In einer weiteren Ausführungsform sind der Rollenträger und das Gehäuse des Reibringgetriebes drehfest miteinander verbunden. Jedoch lässt sich der Rollenträger gegenüber den Reibrädern verschieben. Die Reibräder sind dabei drehbar ausgestaltet, jedoch bevorzugt in ihrer Position gegenüber dem Gehäuse bis auf diese Drehung fixiert. Die Verstelleinrichtung kann mit dem Rollenträger fest verbunden sein. Sie kann als beweglicher Ausleger ausgestaltet sein, welcher insbesondere von dem Rollenträger bis außerhalb des Getriebes verläuft. Dabei verläuft der Ausleger bevorzugt durch das Gehäuse hindurch. Durch drehfeste Verbindung mit dem Gehäuse ist ein Verlauf der Verstellbahn entlang deiner Mittelachse des Getriebes bzw. des Rollenträgers möglich.

In einer weiteren Ausführungsform ist das Fahrzeug mit einem Stellmotor ausgestattet, mit dem die Verstelleinrichtung verstellbar ist. Der Stellmotor kann an dem Reibringgetriebe angeordnet sein und/oder in einer integrierten Einheit von Motor, Getriebe und Kurbelwelle angeordnet sein.

In einer weiteren Ausführungsform umfasst das Reibringgetriebe zwei Spreizkupplungen, welche sich unter Last aufspreizen und den Anpressdruck zwischen den Reibringen und den Doppelkegelrollen erhöhen. Je eine der Spreizkupplungen ist vorzugsweise je einem der Reibringe zugeordnet. Die Spreizkupplungen sind ringförmig ausgebildet, wobei sich der Kraftrückflusspfad zumindest durch eine der Spreizkupplungen hindurch erstreckt.

In einer weiteren Ausführungsform ist die Kraftrückschlusseinrichtung um die Kurbelwelle für die Pedalkurbeln des Fahrzeuges herum angeordnet.
Insbesondere ist die Kraftrückschlusseinrichtung im Wesentlichen als eine Hülse ausgebildet, wobei diese einen sich axial entlang der Kurbelwelle erstreckenden Abschnitt sowie einen sich radial in Richtung zu wenigstens einem der Reibringe hin erstreckenden Abschnitt aufweist. Diese Ausgestaltung ist leichtgewichtig und außerdem einfach im Aufbau und daher leicht herzustellen. Der radial verlaufende Abschnitt kann von dem axial verlaufenden Abschnitt getrennt hergestellt und danach zusammengefügt sein, sodass sich danach eine einstückige oder eine zusammengesetzte Hülse ergibt.

In einer weiteren Ausführungsform ist die innenliegende Kraftrückschlusseinrichtung drehbar in Bezug auf die Kurbelwelle ausgeführt. Auf diese Weise kann die Drehzahl eines drehfest mit der Kraftrückschlusseinrichtung verbundenen Reibrings sich von der Drehzahl der Kurbelwelle unterscheiden. Auf diese Weise kann die Kurbelwelle ins Innere des Reibringgetriebes integriert werden.

In einer weiteren Ausführungsform ist dem Reibringgetriebe ein Vorgetriebe vorgeschaltet, welches die Drehzahl des Reibringgetriebes erhöht. Insbesondere in einer integrierten Anordnung, in der die Kurbelwelle im Inneren des Reibringgetriebes verläuft, wird ein Planetengetriebe bevorzugt, welches ebenfalls konzentrisch zur Kurbelwelle angeordnet ist. Ein Vorteil der höheren Drehzahl des Reibringgetriebes ist, dass geringere Drehmomente auftreten. Auf diese Weise kann die zu übertragende Reibkraft gesenkt werden. Dadurch wiederum kann das Reibringgetriebe leichter ausgeführt werden.

Vorzugsweise ist dem Reibringgetriebe ein Nachgetriebe nachgeschaltet, das vorzugsweise als Planetengetriebe ausgeführt ist und die Abtriebsdrehzahl des Reibradgetriebes an seinem eigenen Abtrieb verringert. Dadurch wird das Drehmoment am Abtrieb erhöht. Insbesondere kann das Nachgetriebe mit seiner Untersetzung die Übersetzung des Vorgetriebes wieder aufheben.

Vorzugsweise wird das Vorgetriebe mit einem Drehmoment angetrieben, welches auf der Kurbelwelle anliegt. Dazu kann mit der Kurbelwelle ein Zahnrad verbunden sein, in welches deren Drehmoment übertragen werden kann. Im Falle eines Planetengetriebes als Vorgetriebe ist bevorzugt dessen Hohlrad auf der Kurbelwelle drehfest befestigt. Alternativ zu einer drehfesten Befestigung kann im Verlauf der Drehmomentübertragung zwischen der Kurbelwelle und dem Hohlrad auch ein Freilauf angeordnet sein, der ein Rückwärtspedalieren unabhängig von der Drehung des Motors ermöglicht. Vorzugsweise wird mit dem Abtrieb des Vorgetriebes ein Reibring des Reibringgetriebes angetrieben. Der Reibring kann angetrieben sein, indem die Kraftrückschlusseinrichtung von dem Vorgetriebe angetrieben wird. Vorzugsweise wird der größere bzw. der äußere der Reibringe angetrieben. Besonders bevorzugt ist die Kraftrückschlusseinrichtung drehfest mit dem größeren der beiden Reibräder verbunden.

In einer weiteren Ausführungsform ist der kleinere bzw. der innere der beiden Reibringe in Bezug auf die Kraftrückschlusseinrichtung drehbar angeordnet, insbesondere über ein Wälzlager. Dies ermöglicht in vielen Fällen, dass für diese Funktion ein kleines Kugellager mit geringem Durchmesser verwendet wird, welches ein geringes Verlustdrehmoment erzeugt und leicht ist.

In einer weiteren Ausführungsform umfasst das Reibringgetriebe ein Summierzahnrad, welches dazu dient, die Drehmomente zu addieren, die aus Muskelkraft und motorisch erzeugt werden. Das Summierzahnrad kann mit einem der beiden Reibringe drehfest verbunden sein. Besonders bevorzugt ist es jedoch mit dem größeren Reibring drehfest verbunden, was in einer Ausführungsform mit Vorgetriebe bedeuten kann, dass es mit dem Abtrieb des Vorgetriebes verbunden ist. Die Summierung geschieht durch Einleiten von Drehmoment in das Summierzahnrad auf verschiedenen Wegen, nämlich zentral durch eine Welle, auf die das Summierzahnrad aufgesetzt wird und durch ein weiteres Zahnrad, welches in den Außenumfang des Summierzahnrads eingreift. Bevorzugt ist dieses weitere Zahnrad ein Zahnrad, welches von dem Motor antreibbar ist.

In einer weiteren Ausführungsform ist zwischen der Kraftrückschlusseinrichtung und einem der Reibräder ein Wälzlager angeordnet, in welchem die Kraftübertragungslinie in einem spitzen Winkel zu der Mittelachse des Rollenträgers steht. Über das Lager verlaufen Andruckkräfte zwischen den Reibringen und den Rollen, die Axialkräfte darstellen. Außerdem erfüllt es die Funktion einer radialen Führung der zueinander drehbar gelagerten Teile. Vorzugsweise werden deshalb Schrägkugellager oder Kegelrollenlager eingesetzt. Vorzugsweise verläuft die Kraftrückschlusseinrichtung im Inneren des Wälzlagers. Vorzugsweise ist der Innenring auf die Kraftrückschlusseinrichtung aufgesteckt oder aufgepresst. Dies ermöglicht einen einfachen Aufbau des Reibringgetriebes. Das Wälzlager läuft vorteilhaft mit der Differenzdrehzahl zwischen der Drehzahl des inneren und des äußeren Reibringes, die in vielen Betriebszuständen geringer als die Drehzahlen der Reibringe selbst ist. Dadurch werden die Lagerverluste und der Lagerverschleiß im Vergleich zu einer Lösung nach dem Stand der Technik, in der die Reibringe einzeln mit Axiallagern an dem Gehäuse abgestützt sind, verringert.

In einem weiteren Aspekt der Erfindung wird ein mit Motorkraft und/oder Pedalkraft betreibbares Fahrzeug vorgeschlagen, welches ein Reibringgetriebe gemäß einer der vorstehend beschriebenen Ausführungsformen aufweist.

In noch einem weiteren Aspekt wird eine Antriebseinrichtung für ein mit Motorkraft und/oder Pedalkraft betreibbares Fahrzeug vorgeschlagen, welche ein Reibringgetriebe gemäß einer der vorstehend beschriebenen Ausführungsformen aufweist.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Darstellung eines Elektrofahrrades, welches eine Ausführungsform des erfindungsgemäßen Reibringgetriebes aufweist.
- Figur 2: eine perspektivische Ansicht einer integrierten Antriebseinheit mit einem erfindungsgemäßen Reibringgetriebe,
- Figur 3: eine perspektivische Ansicht der integrierten Antriebseinheit in der in Figur 2 gezeigten Ausführungsform ohne ein das Reibringgetriebe umgebendes Gehäuse,
- Figur 4: ein Querschnitt durch eine Mittelachse des Rollenträgers verlaufender Querschnitt durch die in Figur 3 gezeigte Antriebseinheit mit Summierzahnrad, Vorgetriebe, Reibringgetriebe und Nachgetriebe,
- Figur 5: vergrößert ein Detail mit einer Doppelkegelrolle aus dem in Figur 4 gezeigten Querschnitt,
- Figur 6: eine zweite Ausführungsform der Antriebseinheit mit einer zweiten Ausführungsform des Reibringgetriebes mit einer als Hülse ausgebildeten Kraftrückschlusseinrichtung und einem Schrägkugellager, und
- Figur 7: eine dritte Ausführungsform der Antriebseinheit mit einer dritten Ausführungsform des Reibringgetriebes mit einer anderen als Hülse ausgebildeten Kraftrückschlusseinrichtung.

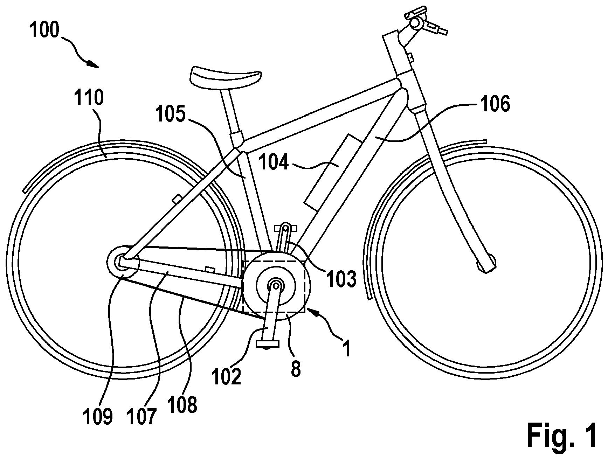

Figur 1 zeigt schematisch ein Elektrofahrrad 100, in welchem eine Antriebseinheit 1 zentral an dem Rahmen angeordnet ist. Insbesondere laufen an oder nahe der Antriebseinheit 1 das Sitzrohr 105, das Unterrohr 106 und die Kettenstrebe 107 zusammen. Die Lagerung der Kurbelwelle für die Pedalarme 102 und 103 ist in die Antriebseinheit 1 integriert. Die Antriebseinheit weist ein Kettenblatt 8 auf, welches den Abtrieb der Antriebseinheit 1 darstellt. Das Kettenblatt 8 überträgt ein Drehmoment von der Antriebseinheit 1 über eine Kette 108 und ein Ritzel 109 zu einem Hinterrad 110. Die Antriebseinheit 1 umfasst einen nicht explizit dargestellten Elektromotor. Der Elektromotor kann mit Energie aus einer Batterie 104 versorgt werden.

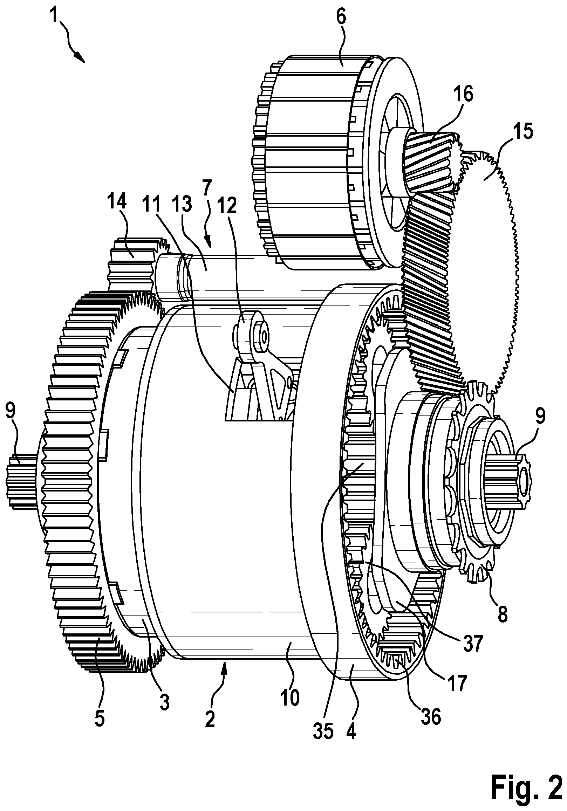

Figur 2 zeigt in einer perspektivischen Ansicht eine integrierte Antriebseinheit 1, welche ein Reibringgetriebe 2, ein Vorgetriebe 3, ein Nachgetriebe 4, ein Summierzahnrad 5, einen Elektromotor 6, ein Zwischengetriebe 7, einen Abtrieb 8 und eine Kurbelwelle 9 aufweist. Die Kurbelwelle 9 ist ohne ihre Kurbeln dargestellt, welche jeweils auf eine Zahnverbindung am Ende der Kurbelwelle 9 aufgesteckt werden können, wobei auch andere Verbindungsarten denkbar sind. Das Reibringgetriebe 2 weist ein Gehäuse 10 auf, welches das Reibringgetriebe 2 bis auf einen Durchbruch 11 zumindest radial umgibt. Durch den Durchbruch 11 ragt aus dem Inneren des Gehäuses als Teil des Reibringgetriebes ein Verstellhebel 12 hervor. Dieser ist in Längsrichtung der Kurbelwelle 9 verschieblich, wodurch das Übersetzungsverhältnis des Reibringgetriebes 2 einstellbar ist. Der Verstellweg der mit dem Verstellhebel 12 ausgeführten Verstelleinrichtung verläuft somit in Bezug auf den Verstellhebel 12 im Inneren des Durchbruchs 11 und in Längsrichtung der Kurbelwelle 9. Der Verstellweg ist wenigstens näherungsweise linear.

Das Zwischengetriebe 7 umfasst eine Zwischenwelle 13, an deren einem Ende ein Ritzel 14 angeordnet ist, welches mit dem Summierzahnrad 5 kämmt. Die Lagerung der Zwischenwelle 13 ist nicht dargestellt. Das Ritzel 14 hat einen erheblich kleineren Durchmesser als das Summierzahnrad 5. Am anderen Ende der Zwischenwelle 13 ist ein Zwischenzahnrad 15 mit erheblich größerem Durchmesser als das Ritzel 14 angeordnet. Das Zwischenzahnrad 15 kämmt mit einem Abtriebszahnrad 16 eines Elektromotors 6, der Teil der Antriebseinheit 1 ist. Auf diese Weise wird über das Zwischengetriebe 7 eine erhebliche Untersetzung der Drehzahl des Elektromotors 6 zu der Drehzahl des Summierzahnrades 5 bewirkt. Eine mechanische Verbindung zwischen dem Elektromotor 6 und dem Gehäuse 10 des Reibringgetriebes 2 ist nicht dargestellt.

Das Nachgetriebe 4 ist als Planetengetriebe ausgeführt, dessen Abtrieb der Planetenträger 17 ist. Der Planetenträger 17 ist drehfest mit dem Abtriebsritzel 8 der integrierten Getriebeeinheit verbunden. Der Antrieb des Planetengetriebes erfolgt über das Sonnenrad 35, während das Hohlrad 36 mit dem Gehäuse 10 drehfest verbunden ist. Eine äußere Abdeckung des Nachgetriebes 4 ist nicht dargestellt, welches vollständig geschlossen ausgeführt sein kann.

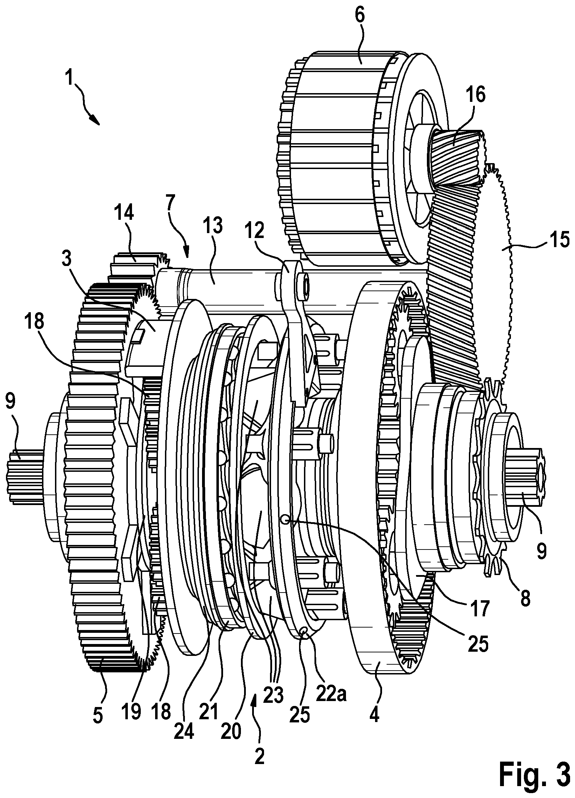

Figur 3 zeigt in einer perspektivischen Ansicht dieselbe integrierte Antriebseinheit 1 wie Figur 2, jedoch mit dem Unterschied, dass das Gehäuse 10 des Reibringgetriebes 2 weggelassen ist, sodass dessen Details sichtbar sind. Außerdem ist ein Teil des Hohlrades des als Planetengetriebe ausgeführten Vorgetriebes 3 weggelassen, sodass seine Planetenräder 18 und sein Planetenträger 19 sichtbar sind. Merkmale und Elemente, die in Figur 1 beschrieben wurden, sind mit gleichen Bezugszeichen versehen und werden nicht noch einmal gesondert beschrieben. Es sei auf Figur 1 verwiesen.

Das Reibringgetriebe 2 umfasst einen äußeren Reibring 20, welcher mit mehreren Doppelkegeln 23 in Reibeingriff steht. Die Doppelkegel 23 sind auf einem Rollenträger 22 angeordnet und laufen auf daran befestigten Achsen 25 um. Der Rollenträger 22 hat einen nicht sichtbaren Teil, der weiter im Inneren des Reibringgetriebes 2 liegt. Der äußere Reibring 20 ist mit einer Spreizkupplung 21 verbunden, welche sich wiederum über ein Axiallager 24 an einem nicht dargestellten Gehäuseteil abstützt. Die Spreizkupplung 21 spreizt sich in axialer Richtung der Kurbelwelle 9 auf, wenn ein Antriebsmoment von dem Summierzahnrad 5 auf das Reibringgetriebe 2 einwirkt. Dadurch wird der Anpressdruck zwischen dem äußeren Reibring 20 und den Doppelkegelrollen 23 erhöht. Der Verstellhebel 12 ist mit dem Rollenträger 25 verbunden, welcher in Axialrichtung der Kurbelwelle 9 verschieblich ausgeführt ist. Die Spreizkupplung 21 kann Federn umfassen oder mit Federn verbunden sein, die eine Vorspannkraft zwischen dem äußeren Reibring 20 und den Doppelkegelrollen 23 bewirken.

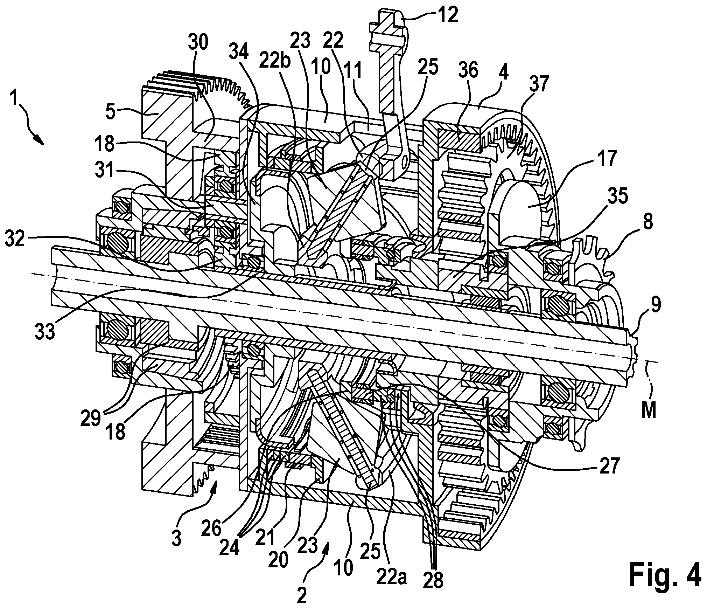

Figur 4 zeigt perspektivisch einen Querschnitt durch die integrierte Antriebseinheit 1, die in Figur 3 dargestellt ist. Der Querschnitt verläuft durch die Mittelachse M der Kurbelwelle 9 und den Verstellhebel 12. Bereits in den Figuren 2 und 3 beschriebene Merkmale und Elemente sind mit denselben Bezugsziffern bezeichnet und werden nicht noch einmal gesondert beschrieben. Es sei auf die Figuren 2 und 3 verwiesen.

In Figur 4 ist der innere Teil des Rollenträgers 22 dargestellt. Dieser ist über die Rollenachsen 25 mit dem äußeren Teil des Rollenträgers 22 verbunden. Weiter ist der innere Reibring 26 dargestellt, welcher mit den Doppelkegeln 23 in Reibeingriff steht. Dem inneren Reibring 26 ist eine Spreizkupplung 27 zugeordnet, welche sich gegen das Gehäuse 10 über ein Axiallager 28 abstützt. Die Spreizkupplung 28 ist wie die Spreizkupplung 21 so ausgelegt, dass sie bei einem auf das Summierzahnrad 5 einwirkenden Antriebsdrehmoment in Längsrichtung der Kurbelwelle 9 gespreizt wird, sodass der Anpressdruck zwischen dem inneren Reibring 26 und den Doppelkegelrollen 23 erhöht wird. Die Spreizkupplung 27 kann Federn umfassen oder mit Federn verbunden sein, die eine Vorspannkraft zwischen dem inneren Reibring 26 und den Doppelkegelrollen 23 bewirken. Der Durchmesser der Spreizkupplung 21 ist kleiner als der der Spreizkupplung 27.

Im Folgenden wird der Kraftfluss durch den in Figur 4 dargestellten Teil der Antriebseinheit 1 beschrieben. Ein Drehmoment kann über nicht dargestellte Kurbeln per Pedalkraft in die Kurbelwelle 9 eingebracht werden. Das Drehmoment in der Kurbelwelle 9 wird über einen Freilauf 29 in das Summierzahnrad 5 eingebracht. Der Freilauf 29 bewirkt, dass ein Rückwärtspedalieren möglich ist, während der Rest der dargestellten Getriebe den Umdrehungen seines Abtriebs 8 entsprechend umläuft. Das Summierzahnrad 5 ist mit dem Hohlrad 30 des Vorgetriebes 3 drehfest verbunden, sodass beide gemeinsam umlaufen. Die Planetenräder 18 des Vorgetriebes 3 sind auf Planetenwellen 31 gelagert, welche an dem Gehäuse 10 befestigt sind. Die Position der Planetenräder 18 ist somit bis auf ihre Eigendrehung fixiert. Das Sonnenrad 32 des Vorgetriebes ist mit einer Hülse 33 drehfest verbunden, die das Drehmoment von dem Sonnenrad 32 zu dem Reibringgetriebe 2 leitet. Durch die Übersetzung des Vorgetriebes 3 ist die Drehzahl der Hülse 33 höher als die Drehzahl des Summierzahnrades 5. Die Hülse 33 ist drehbar auf die Kurbelwelle 9 aufgesteckt. Auf die Hülse 33 ist eine Antriebsscheibe 34 aufgepresst, welche das Drehmoment von der Hülse 33 über die Spreizringkupplung 21 zu dem äußeren Reibring 20 weiterleitet. Das Drehmoment wird sodann auf die Doppelkegelrollen 23 übertragen. Da der Rollenträger 22 nicht drehbar, sondern nur in Längsrichtung der Kurbelwelle 9 verschieblich angeordnet ist, wird das Drehmoment von dem äußeren Reibring 20 vollständig in eine Drehung der Doppelkegelrollen 23 übertragen. Diese übertragen das Drehmoment weiter zu dem inneren Reibring 26, mit dem sie ebenfalls in Reibeingriff stehen. Über die Spreizkupplung 27 wird das Drehmoment weiter zu dem Sonnenrad 35 des Nachgetriebes 4 übertragen. Das Hohlrad 36 des Nachgetriebes 4 ist mit dem Gehäuse 10 drehfest verbunden. Das Drehmoment wird somit auf den Planetenträger 17 der Planetenräder 37 des Nachgetriebes 4 übertragen. Wie schon zuvor erwähnt, ist der Planetenträger 17 des Nachgetriebes 4 mit dem bevorzugt als Ritzel ausgeführten Abtrieb 8 drehfest verbunden, sodass an diesem, beispielsweise über eine Kette, das Drehmoment aus der integrierten Getriebeeinheit 1 abgenommen werden kann.

Der äußere Reibring 20 und der innere Reibring 26 sind wie schon erwähnt durch jeweils zugeordnete Axiallager 24 und 28 am Gehäuse 10 abgestützt. Das Gehäuse 10 bildet in der Ausführungsform der Figuren 1 bis 3 somit eine Kraftrückflusseinrichtung für die Kräfte, die insbesondere aus den Spreizkupplungen 21 und 27 stammen. Diese Kräfte entsprechen den Presskräften auf die Doppelkegelrollen 23. Die Axiallager 24 und 28 laufen jeweils mit der Drehzahl des großen Reibringes 20 beziehungsweise des kleinen Reibringes 26. Insbesondere das Axiallager 24 des großen Reibringes erzeugt ein relativ hohes Reibmoment, weil es in vielen Betriebszuständen eine hohe Drehzahl und außerdem einen großen Reibradius aufweist.

Die Kurbelwelle 9 ist mit dem Rollenträger 22, den Axiallagern 24 und 28, den Spreizkupplungen 21 und 27 sowie mit dem kleinen Reibring 26 und dem großen Reibring 20 konzentrisch angeordnet. Außerdem sind das Vorgetriebe 3 und das Nachgetriebe 4, die beide als Planetengetriebe ausgeführt sind, konzentrisch zu der Kurbelwelle 9 angeordnet. Gleiches gilt auch für das Summierzahnrad 5 und das Ritzel des Abtriebs 8.

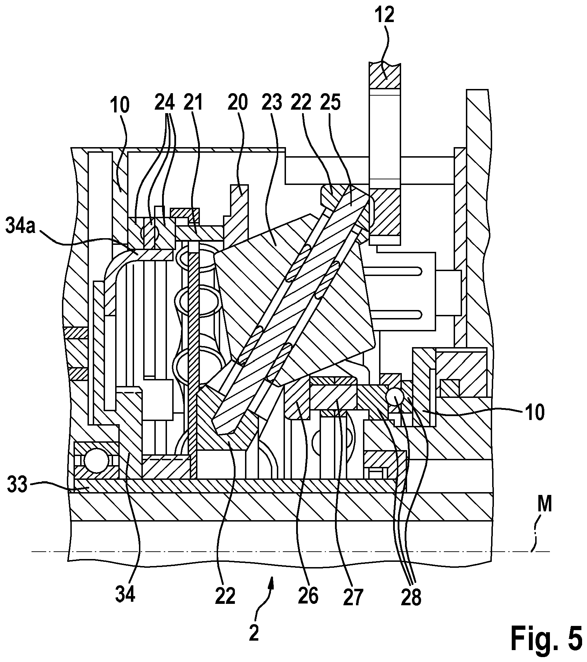

Figur 5 zeigt einen Ausschnitt aus dem in Figur 4 perspektivisch dargestellten Querschnitt, welcher das Reibringgetriebe 2 umfasst, in einer als Halbschnitt gezeigten Ansicht. Gleiche Merkmale und Elemente sind mit gleichen Bezugsziffern bezeichnet und werden nicht noch einmal gesondert beschrieben. Es sei diesbezüglich auf Figur 4 verwiesen. In Figur 5 ist gut zu erkennen, dass die Antriebsscheibe 34 einen in axiale Richtung umgebogenen Rand 34a umfasst, über welchen Drehmoment von der Hülse 33 zu der Spreizkupplung 21 geleitet wird.

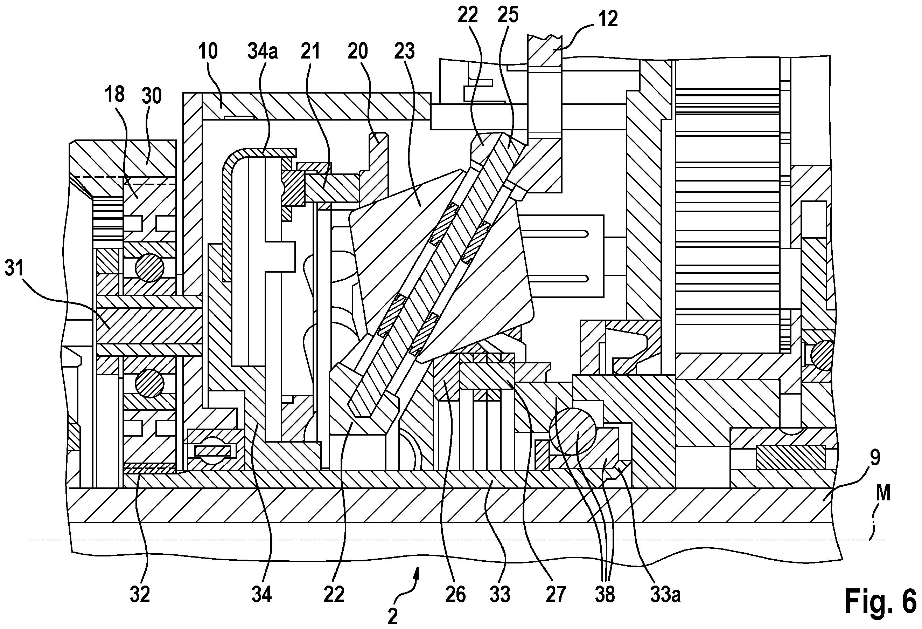

Figur 6 zeigt einen etwas größeren Ausschnitt der in Figur 5 gezeigten Ansicht, jedoch mit dem Unterschied, dass Figur 6 eine zweite Ausführungsform der Antriebseinheit 1 mit einer zweiten Ausführungsform des Reibringgetriebes 2 zeigt. Gleiche Merkmale und Elemente sind mit denselben Bezugsziffern wie in den vorstehend beschriebenen Figuren bezeichnet und werden nicht noch einmal gesondert beschrieben.

Im Unterschied zu der in Figur 5 gezeigten ersten Ausführungsform weist die zweite Ausführungsform in Figur 6 keine Axiallager 24 und 28 auf, mit denen sich das Reibringgetriebe an dem Gehäuse 10 abstützt. Stattdessen dient als Kraftrückschlusseinrichtung die Hülse 33, die in der zweiten Ausführungsform mit einem Axialkraftaufnahmeabschnitt 33a ausgestattet ist. Die von dem inneren Reibring 26 auf die Doppelkegelrollen 23 ausgeübte Kraft wird über die Spreizkupplung 27 auf ein Schrägkugellager 38 übertragen. Dieses Schrägkugellager 38 ist mit seinem Innenring auf die Hülse 33 aufgesteckt oder aufgepresst. Eine Kante einer Axialfläche des Innenrings des Schrägkugellagers 38 stützt sich axial an dem Axialkraftaufnahmeabschnitt 33a der Hülse 33 ab. Die Axialkräfte, die den Andruckkräften an die Doppelkegelrollen 23 entsprechen, werden durch die Hülse bis zu der Andruckscheibe 34 weitergeleitet, welche sie über ihren Axialabschnitt 34a zu der Spreizkupplung 21 und dem äußeren Reibring 20 weiterleitet. Auf diese Weise ist der Kraftfluss, mit welchem der Doppelkegel 23 eingeklemmt ist, geschlossen. Das Schrägkugellager 38 läuft mit der Differenzgeschwindigkeit des äußeren Reibrings 20 und des inneren Reibringes 26 um. Diese Drehzahl ist in vielen Betriebszuständen geringer als die Drehzahl des inneren beziehungsweise äußeren Reibringes 26, 21 gegenüber dem Gehäuse 10, was das Lager schont.

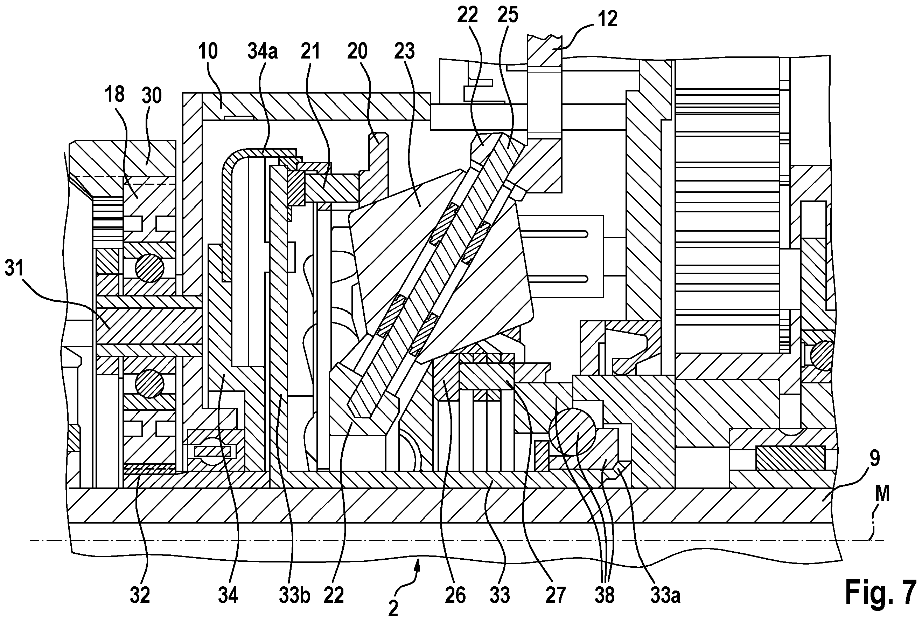

Figur 7 zeigt dieselbe Ansicht eines Querschnitts des Reibringgetriebes 2 im Halbschnitt wie Figur 6, jedoch mit dem Unterschied, dass in Figur 7 eine dritte Ausführungsform des Reibringgetriebes 2 dargestellt ist. Gleiche Merkmale und Elemente sind mit gleichen Bezugsziffern bezeichnet und werden nicht noch einmal gesondert beschrieben. Es sei auf die Figur 5 und die vorangehende beschriebenen Figuren verwiesen.

Im Unterschied zu der Ausführungsform der Figur 6 ist die Kraftrückschlusseinrichtung in der Ausführungsform der Figur 7 mit einer einstückig ausgeführten Hülse 33 realisiert, welche einen sich radial erstreckenden Abschnitt 33b umfasst, welcher Teil der Kraftrückschlusseinrichtung ist. Die Antriebsscheibe 34 ist daher von der zurückfließenden Presskraft der Reibringe nicht oder kaum belastet und kann als seine Hauptlast das Drehmoment von dem Sonnenrad 32 des Vorgetriebes zu dem großen Reibring 20 übertragen. Durch die einstückige Ausführung der Hülse 33 mit ihrem radial auskragenden Abschnitt 33b ist eine höhere Ausfallsicherheit gegeben, weil eine alternativ denkbare Verbindung zwischen der Antriebsscheibe 34 und der Hülse 33 aufgrund der Einstückigkeit nicht versagen kann.

## Patentansprüche

1. Reibringgetriebe (2) für ein mit Motorkraft und/oder Pedalkraft betreibbares Fahrzeug (100) mit einer Kurbelwelle (9) für Tretkurbeln (102, 103), insbesondere für ein Elektrofahrrad, wobei
- das Reibringgetriebe (2) einen inneren Reibring (26) und einen äußeren Reibring (20) sowie wenigstens eine auf einem Rollenträger (22) angeordnete, drehbare Doppelkegelrolle (23) aufweist, die bei einer Drehmomentübertragung über das Reibringgetriebe (2) mit dem inneren Reibrad (26) und dem äußeren Reibring (20) jeweils unter einer Andruckkraft in Reibeingriff steht,
- wobei in einem Kraftflusspfad von dem inneren Reibring (26) zu dem äußeren Reibring (20) eine Kraftrückschlusseinrichtung zur Übertragung von Andruckkraft von einem Reibring (20, 26) zu dem anderen Reibring (20, 26) angeordnet ist, wobei einer der Reibringe (20, 26) in Bezug auf die Kraftrückschlusseinrichtung drehfest angeordnet ist und der andere Reibring (26, 20) in Bezug auf die Kraftrückschlusseinrichtung drehbar angeordnet ist, und
- das Reibringgetriebe (2) eine Verstelleinrichtung (12) für das Übersetzungsverhältnis aufweist und diese Verstelleinrichtung (12) entlang eines Verstellweges beweglich ist, der in Richtung einer Mittelachse (M) der Reibringe (20, 26) verläuft, und
- der Rollenträger (22) und die Verstelleinrichtung (12) sowie zumindest ein Abschnitt eines Gehäuses (10) des Reibringgetriebes (2) nicht rotierend angeordnet sind
**dadurch gekennzeichnet, dass**
- die Verstelleinrichtung (12) zugleich weniger als 360 Grad um eine Mittelachse (M) des Rollenträgers (22) herum verläuft,
- die Verstelleinrichtung (12) durch den Abschnitt des Gehäuses (10) hindurch verläuft, und
- die Verstelleinrichtung (12) fest mit dem Rollenträger (22) verbunden ist, sodass eine Betätigung der Verstelleinrichtung den Rollenträger in axialer Richtung unmittelbar verschiebt, wobei die Verstelleinrichtung kein Verstellgewinde aufweist.

2. Reibringgetriebe (2) nach Anspruch 1, **dadurch gekennzeichnet, dass** die Kraftrückschlusseinrichtung innerhalb der Reibringe (20, 26) verläuft.

3. Reibringgetriebe (2) nach dem Anspruch 2 **dadurch gekennzeichnet, dass** das Reibringgetriebe (2) einen Stellmotor zur Verstellung der Verstelleinrichtung (12) aufweist.

4. Reibringgetriebe (2) nach einem der vorangehenden Ansprüche, **dadurch gekennzeichnet, dass** das Reibringgetriebe (2) zwei ringförmige Spreizkupplungen (21, 27) aufweist, durch welche sich die Kraftrückschlusseinrichtung erstreckt, wobei insbesondere wenigstens eine Spreizkupplung (21, 27) zwischen der Kraftrückschlusseinrichtung und einem Reibring (20, 26) angeordnet ist.

5. Reibringgetriebe (2) nach einem der vorangehenden Ansprüche, **dadurch gekennzeichnet, dass** die Kraftrückschlusseinrichtung um eine Kurbelwelle (9) herum angeordnet ist und insbesondere als Hülse (33) ausgebildet ist, insbesondere als einstückige Hülse (33).

6. Reibringgetriebe (2) nach Anspruch 5, **dadurch gekennzeichnet, dass** die Kraftrückschlusseinrichtung einen sich radial von der Kurbelwelle (9) weg erstreckenden Abschnitt (33a, 34, 34a) zur Verbindung mit einem der Reibringe (20, 26) aufweist oder dieser Abschnitt (33a, 34, 34a) einstückig mit einem Reibring (20, 26) ausgeführt ist.

7. Reibringgetriebe (2) nach einem der vorangehenden Ansprüche, **dadurch gekennzeichnet, dass** dem Reibringgetriebe (2) ein Vorgetriebe (3) vorgeschaltet ist, das die Drehzahl des Reibradgetriebes (2) gegenüber der Antriebsdrehzahl des Vorgetriebes (3) erhöht, wobei das Vorgetriebe (3) insbesondere ein Planetengetriebe (18, 30, 31, 32) ist.

8. Reibringgetriebe (2) nach einem der vorangehenden Ansprüche, **dadurch gekennzeichnet, dass** die Kraftrückschlusseinrichtung mit einem Antriebselement des Reibringgetriebes (2), insbesondere einer Welle oder einem Zahnrad, insbesondere einem Abtriebssonnenrad (32) eines Planetengetriebes (18, 30, 31, 32), drehfest verbunden ist.

9. Reibringgetriebe (2) nach einem der vorangehenden Ansprüche, **dadurch gekennzeichnet, dass** der kleinere Reibring (26) gegenüber der Kraftrückschlusseinrichtung drehbar angeordnet ist.

10. Reibringgetriebe (2) nach einem der vorangehenden Ansprüche, **dadurch gekennzeichnet, dass** das Reibringgetriebe (2) ein Summierzahnrad (5) zum Summieren der Drehmomente von der Kurbelwelle (9) und einem Elektromotor (6) aufweist.

11. Reibringgetriebe (2) nach einem der vorangehenden Ansprüche, **dadurch gekennzeichnet, dass** zwischen der Kraftrückschlusseinrichtung und einem der Reibringe (20, 26) ein Wälzlager (38) angeordnet ist, in welchem eine Drucklinie zwischen Berührungsstellen eines Wälzkörpers an die Laufringe in einem spitzen Winkel zu der Mittelachse (M) des Rollenträgers (22) steht, wobei das Wälzlager (38) insbesondere als Schrägkugellager oder als Kegelrollenlager ausgebildet ist.

12. Reibringgetriebe (2) nach Anspruch 11, **dadurch gekennzeichnet, dass** die Kraftrückschlusseinrichtung von dem Wälzlager (38) radial umgeben ist, wobei insbesondere ein innerer Laufring des Wälzlagers (38) auf einer Außenoberfläche der Kraftrückschlusseinrichtung angeordnet ist und sich bevorzugt axial an dieser abstützt.

13. Mit Motorkraft und/oder Pedalkraft betreibbares Fahrzeug (100), **dadurch gekennzeichnet, dass** das Fahrzeug (100) ein Reibringgetriebe (2) nach einem der vorangehenden Ansprüche aufweist.

14. Fahrzeug (100) nach Anspruch 13, **dadurch gekennzeichnet, dass** das Fahrzeug (100) einen Stellmotor zur Verstellung der Verstelleinrichtung (12) aufweist.

## Claims

1. Friction ring-type transmission (2) for a vehicle (100) operable using motor power and/or pedal power, having a crankshaft (9) for pedal cranks (102, 103), in particular for an electric bicycle, wherein
- the friction ring-type transmission (2) has an inner friction ring (26) and an outer friction ring (20) and at least one rotatable double-cone roller (23) which is arranged on a roller carrier (22) and which, during a transmission of torque via the friction ring-type transmission, is in frictional engagement with the inner friction wheel (26) and the outer friction ring (20) in each case under the action of a contact-pressure force,
- wherein, in a force flow path from the inner friction ring (26) to the outer friction ring (20), there is arranged a force return device for transmitting contact-pressure force from one friction ring (20, 26) to the other friction ring (20, 26), wherein one of the friction rings (20, 26) is arranged rotationally conjointly in relation to the force return device and the other friction ring (26, 20) is arranged rotatably in relation to the force return device, and
- the friction ring-type transmission (2) has an adjusting device (12) for the transmission ratio, and said adjusting device (12) is movable along an adjustment travel which runs in the direction of a central axis (M) of the friction rings (20, 26), and
- the roller carrier (22) and the adjusting device (12) and at least one portion of a housing (10) of the friction ring-type transmission (2) are arranged so as not to rotate,
**characterized in that**
- the adjusting device (12) simultaneously runs around a central axis (M) of the roller carrier (22) over less than 360 degrees,
- the adjusting device (12) runs through the portion of the housing (10), and
- the adjusting device (12) is fixedly connected to the roller carrier (22), such that an actuation of the adjusting device directly displaces the roller carrier in an axial direction, wherein the adjusting device has no adjusting thread.

2. Friction ring-type transmission (2) according to Claim 1, **characterized in that** the force return device runs within the friction rings (20, 26).

3. Friction ring-type transmission (2) according to Claim 2, **characterized in that** the friction ring-type transmission (2) has an actuating motor for adjusting the adjusting device (12).

4. Friction ring-type transmission (2) according to any of the preceding claims, **characterized in that** the friction ring-type transmission (2) has two ringshaped spreading clutches (21, 27) through which the force return device extends, wherein, in particular, at least one spreading clutch (21, 27) is arranged between the force return device and a friction ring (20, 26) .

5. Friction ring-type transmission (2) according to any of the preceding claims, **characterized in that** the force return device is arranged around a crankshaft (9) and is designed in particular as a sleeve (33), in particular as a single-piece sleeve (33).

6. Friction ring-type transmission (2) according to Claim 5, **characterized in that** the force return device has a portion (33a, 34, 34a) which extends radially away from the crankshaft (9) and which serves for connecting to one of the friction rings (20, 26), or said portion (33a, 34, 34a) is formed as a single piece with a friction ring (20, 26).

7. Friction ring-type transmission (2) according to any of the preceding claims, **characterized in that**, upstream of the friction ring-type transmission (2), there is positioned a pre-transmission (3) which increases the rotational speed of the friction wheel-type transmission (2) in relation to the drive rotational speed of the pre-transmission (3), wherein the pre-transmission (3) is in particular a planetary transmission (18, 30, 31, 32).

8. Friction ring-type transmission (2) according to any of the preceding claims, **characterized in that** the force return device is connected rotationally conjointly to a drive element of the friction ring-type transmission (2), in particular a shaft or a toothed gear, in particular a drive sun gear (32) of a planetary transmission (18, 30, 31, 32).

9. Friction ring-type transmission (2) according to any of the preceding claims, **characterized in that** the relatively small friction ring (26) is arranged so as to be rotatable relative to the force return device.

10. Friction ring-type transmission (2) according to any of the preceding claims, **characterized in that** the friction ring-type transmission (2) has a summing toothed gear (5) for summing the torques of the crankshaft (9) and an electric motor (6).

11. Friction ring-type transmission (2) according to any of the preceding claims, **characterized in that**, between the force return device and one of the friction rings (20, 26), there is arranged a rolling bearing (38) in which a pressure line between contact points of a rolling body against the raceways is at an acute angle with respect to the central axis (M) of the roller carrier (22), wherein the rolling bearing (38) is designed in particular as an angular-contact ball bearing or as a tapered-roller bearing.

12. Friction ring-type transmission (2) according to Claim 11, **characterized in that** the force return device is radially surrounded by the rolling bearing (38), wherein, in particular, an inner raceway of the rolling bearing (38) is arranged on an outer surface of the force return device and is preferably supported axially thereon.

13. Vehicle (100) operable using motor power and/or pedal power, **characterized in that** the vehicle (100) has a friction ring-type transmission (2) according to any of the preceding claims.

14. Vehicle (100) according to Claim 13, **characterized in that** the vehicle (100) has an actuating motor for adjusting the adjusting device (12).

## Revendications

1. Transmission à anneau de friction (2) destinée à un véhicule (100) pouvant être propulsé par moteur et/ou par pédales, la transmission comprenant un vilebrequin (9) destiné à des manivelles (102, 103), en particulier un vélo électrique,
- la transmission à anneau de friction (2) comportant un anneau de friction intérieur (26) et un anneau de friction extérieur (20) et au moins un rouleau rotatif à double cône (23) qui est disposé sur un support de rouleau (22) et qui est en engagement par friction, lors d'une transmission de couple par le biais de la transmission à anneau de friction (2), à la roue de friction intérieur (26) et à l'anneau de friction extérieur (20) à chaque fois avec une force de pression,
- un moyen de retour de force destiné à transmettre la force de pression d'un anneau de friction (20, 26) à l'autre anneau de friction (20, 26) étant disposé dans un chemin de flux de force allant de l'anneau de friction intérieur (26) à l'anneau de friction extérieur (20), l'un des anneaux de friction (20, 26) étant disposé solidairement en rotation par rapport au moyen de retour de force et l'autre anneau de friction (26, 20) étant disposé à rotation par rapport au moyen de retour de force, et
- la transmission à anneau de friction (2) comportant un dispositif de réglage (12) destiné au rapport de transmission et ce dispositif de réglage (12) étant mobile le long d'un chemin de réglage qui s'étend en direction d'un axe central (M) des anneaux de friction (20, 26) et
- le support de rouleau (22) et le dispositif de réglage (12) ainsi qu'au moins une partie d'un boîtier (10) de la transmission à anneau de friction (2) n'étant pas disposés à rotation,
**caractérisé en ce que**
- le dispositif de réglage (12) s'étend en même temps sur moins de 360 degrés autour d'un axe central (M) du support de rouleau (22),
- le dispositif de réglage (12) s'étend à travers la partie du boîtier (10), et
- le dispositif de réglage (12) est relié de manière fixe au support de rouleau (22), de sorte qu'un actionnement du dispositif de réglage déplace directement le support de rouleau dans la direction axiale, le dispositif de réglage n'ayant pas de filetage de réglage.

2. Transmission à anneau de friction (2) selon la revendication 1, **caractérisée en ce que** le moyen de retour de force est situé à l'intérieur des anneaux à friction (20, 26).

3. Transmission à anneau de friction (2) selon la revendication 2, **caractérisée en ce que** la transmission à anneau de friction (2) comporte un servomoteur destiné à régler le dispositif de réglage (12).

4. Transmission à anneau de friction (2) selon l'une des revendications précédentes, **caractérisée en ce que** la transmission à anneau de friction (2) comporte deux accouplements extensibles annulaires (21, 27) à traves lequel s'étend le moyen de retour de force, au moins un accouplement extensible (21, 27) étant notamment disposé entre le moyen de retour de force et un anneau de friction (20, 26).

5. Transmission à anneau de friction (2) selon l'une des revendications précédentes, **caractérisée en ce que** le moyen de retour de force est disposé autour d'un vilebrequin (9) et est notamment conçu sous la forme d'un manchon (33), notamment sous la forme d'un manchon monobloc (33).

6. Transmission à anneau de friction (2) selon la revendication 5, **caractérisée en ce que** le moyen de retour de force comprend une partie (33a, 34, 34a) qui s'étend radialement depuis le vilebrequin (9) et qui est destinée à être reliée à l'un des anneaux de friction (20, 26) ou cette partie (33a, 34, 34a) est réalisée d'une seule pièce avec un anneau de friction (20, 26) .

7. Transmission à anneau de friction (2) selon l'une des revendications précédentes, **caractérisée en ce que** la transmission à anneau de friction (2) est montée en amont d'un pré-engrenage (3) qui augmente la vitesse de la transmission à roue de friction (2) par rapport à la vitesse d'entrée du pré-engrenage (3), la transmission intermédiaire (3) étant en particulier un engrenage planétaire (18, 30, 31, 32).

8. Transmission à anneau de friction (2) selon l'une des revendications précédentes, **caractérisée en ce que** le moyen de retour de force est relié solidairement en rotation à un élément d'entraînement de la transmission à anneau de friction (2), en particulier un arbre ou une roue dentée, en particulier une roue solaire entraînée (32) d'un engrenage planétaire (18, 30, 31, 32).

9. Transmission à anneau de friction (2) selon l'une des revendications précédentes, **caractérisée en ce que** le plus petit anneau de friction (26) est disposé à rotation par rapport au moyen de retour de force.

10. Transmission à anneau de friction (2) selon l'une des revendications précédentes, **caractérisée en ce que** la transmission à anneau de friction (2) comporte une roue dentée de sommation (5) destinée à additionner les couples du vilebrequin (9) et d'un moteur électrique (6) .

11. Transmission à anneau de friction (2) selon l'une des revendications précédentes, **caractérisée en ce qu'**un palier à roulement (38) est disposé entre le moyen de retour de force et l'un des anneaux de friction (20, 26), palier à roulement dans lequel un conduit de pression entre des points de contact d'un élément roulant avec les bagues de roulement forme un angle aigu par rapport à l'axe central (M) du support de rouleau (22), le palier à roulement (38) étant notamment conçu sous forme d'un palier à billes à portée oblique ou un palier conique à rouleaux.

12. Transmission à anneau de friction (2) selon la revendication 11, **caractérisée en ce que** le moyen de retour de force est entouré radialement par le palier à roulement (38), une bague de roulement intérieure (38) étant notamment disposée sur une surface extérieure du moyen de retour de force et s'appuyant de préférence axialement sur celui-ci.

13. Véhicule (100) pouvant être propulsé par moteur et/ou par pédales, **caractérisé en ce que** le véhicule (100) comprend une transmission à anneau de friction (2) selon l'une des revendications précédentes.

14. Véhicule (100) selon la revendication 13, **caractérisé en ce que** le véhicule (100) comporte un servomoteur destiné à régler le dispositif de réglage (12) .
